# EUROPEAN PATENT SPECIFICATION

(11) **EP 1 627 316 B1**
(45) Date of publication and mention of the grant of the patent: **21.02.2018**
(21) Application number: 04734532.7
(22) Date of filing: 24.05.2004
(51) Int. Cl.: G06F 15/16, G06F 15/173, G06F 11/20

(54) **DATA COLLECTION IN A COMPUTER CLUSTER**
DATENSAMMLUNG IN EINEM COMPUTERCLUSTER
COLLECTE DE DONNEES DANS UN GROUPE D'ORDINATEURS

(30) Priority: 27.05.2003 FI 20030796; 31.07.2003 US 630972
(43) Date of publication of application: 22.02.2006
(73) Proprietor: Vringo Infrastructure Inc., New York, NY 10017 (US)
(72) Inventor: VAINIO, Jukka, A., FI-21420 Lieto (FI); JALONEN, Teemu, V., FI-00350 Helsinki (FI)
(74) Representative: Hale, Peter
(86) International application number: PCT/FI2004/000314
(87) International publication number: WO 2004/107196

(56) References cited:
- US-A- 5 778 185
- US-A1- 2003 233 594
- US-B1- 6 609 213

## Description

### BACKGROUND OF THE INVENTION:

### Field of the Invention:

The present invention relates generally to computer clusters that include a plurality of computer nodes. More particularly, the present invention relates to a mechanism for collecting state information within the cluster. In this context, state information refers to data that indicates how the resources of a computer node are able to complete their tasks in the cluster. The state information may thus include, not only data indicating the current load of the various resources of a computer node, but also data about the current performance or capacity of the resources in the computer node, i.e. data about the current ability of the resources to complete their tasks in the cluster. Description of the Related Art:

As is commonly known, a computer cluster is a group of computers working together to complete one or more tasks. Computer clusters can be used for load balancing, for improved fault tolerance (i.e., for improved availability in case of failures), or for parallel computing, for example.

A typical computer cluster comprises a plurality of computer nodes. A computer node here refers to an entity provided with a dedicated processor, memory, and operating system, as well as with a network interface through which it can communicate with other computer nodes of the cluster. At least one of the computer nodes in the cluster is capable of acting as a manager node that manages the cluster. In order to detect failures in the cluster, the manager node sends certain messages, called heartbeats, periodically to the other computer nodes in the cluster. Typically, only one computer node at a time acts as a manager node.

Instead of using a centralized manager node for detecting failures in distributed systems, fault detection mechanisms may be integrated into every node of the system. US 2003/0018930 A1 discloses a distributed system in which each node of the system finds a partner node to establish a peer-to-peer checking system for detecting node failures. Periodic check messages are sent from the node to its partner node, and vice versa, to request the operating status of the partner node. An abnormal status or non-received response from a partner node is reported to a monitoring station or stored as a network event for further report when needed. Furthermore, in systems where multiple nodes share a common resource, recurrent or periodic status messages may be used to inform the status of the resource. WO 98/12837 discloses an information distribution system comprising a plurality of stations provided with a shared resource, such as an audio channel. A station that requires the shared resource checks resource status information stored in local memory. If the resource is available, the station recurrently sends a status message to inform the other stations of the system that it uses the shared resource. Upon receiving a status message, the other stations update the resource status information in their local memories.

In addition to node failures, the control software of a computer cluster has to be aware of the current performance or capacity of the resources in the nodes of cluster. For this purpose, the control software, residing typically in the manager node, has to monitor all computer nodes that belong to the cluster. In order to get a true and up-to-date picture of the state of the nodes, the control software has to collect state information at a fairly high frequency from the nodes. This is a problem especially in large computer clusters, which may contain tens, or even hundreds of computer nodes. In these large computer clusters the data collection rate has to be compromised in favor of the performance of the network and the computer nodes, to ensure that the network does not become congested due to the data collection and that the performance of the computer nodes remains at an acceptable level despite the data collection performed. In other words, in large clusters the data collection rate has to be compromised in order not to degrade the performance of the network or the computer nodes excessively.

The objective of the present invention is to eliminate or alleviate this drawback.

### SUMMARY OF THE INVENTION:

The invention seeks to bring about a novel mechanism for collecting state information from the computer nodes of a computer cluster. The invention seeks to provide a mechanism that does not require the collection rate of the state information to be compromised in favor of network or node performance even in large clusters.

This objective is achieved with the solution defined in the independent claims.

In the present invention, an internal property of a computer cluster, the heartbeat mechanism, is utilized for collecting state information from the computer nodes for monitoring and control purposes. As described below, the collected state information may be utilized either internally in the computer cluster or by an outside entity, such as a network monitoring or management system.

By means of the invention, real-time state information can be collected from the computer nodes of a computer cluster without excessively loading the network or the computer nodes, i.e. the information collection rate does not need to be compromised due to the load the collection causes. The overhead caused by the increased length of the acknowledgment message is relatively low, especially if the length of the minimum transmission unit is not exceeded.

Furthermore, since a computer node receiving a heartbeat message checks whether state information is to be retrieved for the heartbeat acknowledgment message to be sent as a response to the heartbeat message, unnecessary transfer of state information can be avoided.

A further advantage of the invention is that the collected information may be simultaneously utilized by different entities within or outside of the computer cluster.

Other features and advantages of the invention will become apparent through reference to the following detailed description and accompanying drawings.

### BRIEF DESCRIPTION OF THE DRAWINGS:

In the following, the invention and its preferred embodiments are described more closely with reference to the examples shown in FIG. 1 to 5 in the appended drawings, wherein:
FIG. 1 illustrates one computer cluster according to the invention;
FIG. 2 is a flow diagram illustrating the basic operation of a manager node in view of one heartbeat message;
FIG. 3a is a flow diagram illustrating one embodiment for sending state information from a computer node;
FIG. 3b is a flow diagram illustrating another embodiment for sending state information from a computer node;
FIG. 4 is a schematic diagram illustrating the collection of state information in a computer node; and
FIG. 5 is a schematic presentation of a heartbeat message according to the invention.

### DETAILED DESCRIPTION OF THE PREFERRED EMBODIMENT(S):

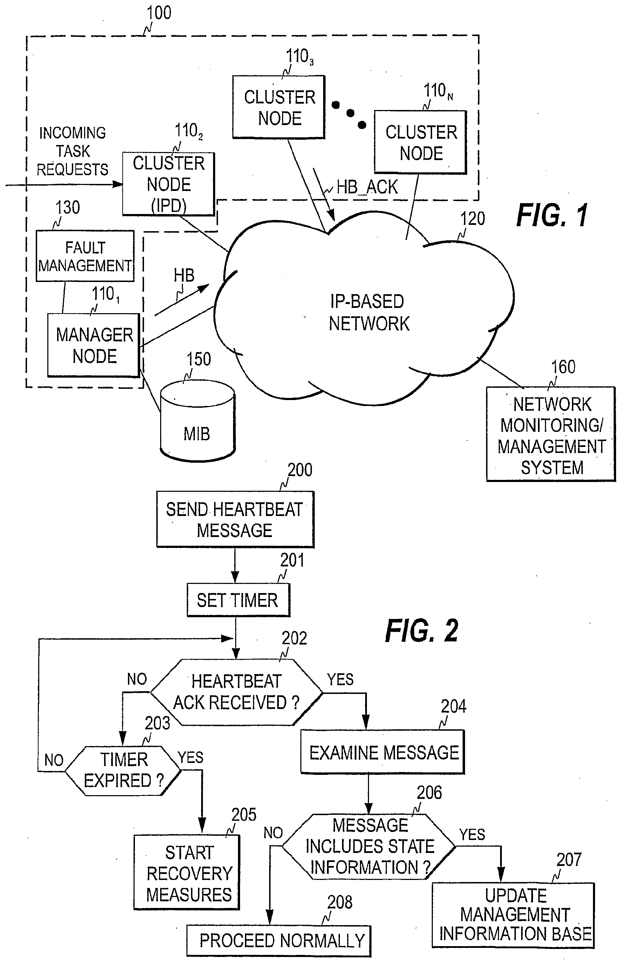

FIG. 1 shows an example of a computer cluster 100 in which the mechanism of the invention is utilized. The cluster comprises N computer nodes 110ᵢ (i=1,2,3,...N). Each computer node is an independent entity provided with a processor, memory and an operating system copy of its own. Each computer node is further provided with a network interface for connecting it to a network 120, which is typically an Internet Protocol (IP) based network. It is to be noted here that the mechanism of the invention is not dependent on the transmission protocol, but may be applied in many different environments. However, an IP network forms a typical environment for the invention.

At each time, one of the computer nodes, in this example node 110₁, operates as a manager node that manages the cluster and its resources. In order to detect failures occurring in the cluster, the manager node sends heartbeat messages HB periodically to the other computer nodes in the cluster. Although the cluster may include more than one node being able to act as a manager node, one of such nodes operates as the manager node at a time. A single heartbeat message is typically a multicast message destined for all nodes of the cluster, and the period between two successive heartbeat messages depends greatly on the application environment.

When a computer node receives a heartbeat message from the manager node, it returns a heartbeat acknowledgment message HB_ACK to the manager node, indicating to the manager node that it is alive and can therefore remain in the cluster. If the manager node does not receive a heartbeat acknowledgment message from a computer node, it starts recovery measures immediately. Typically, the computer node with which a communication failure has been detected is removed from the cluster, and the cluster-specific activities of the node are reassigned to one or more other nodes.

A variety of different tasks may be performed by the cluster, and the actual applications may be distributed in a variety of ways within the cluster. One or more of the cluster nodes may appear as a single entity to an element external to the cluster. For example, if the computer nodes perform routing, one or more of the computer nodes may form a routing network element, as seen from the outside of the cluster. In another example, all computer nodes appear as a single entity to an external viewer.

If load sharing groups are utilized in the cluster, one or more of the computer nodes may further operate as an Internet Protocol Director (IPD) node, which is a load sharing control node routing incoming task requests within a load sharing group. In the example of FIG. 1, computer node 110₂ operates as an IPD node receiving task requests from the outside of the computer cluster.

In the present invention, the intrinsic heartbeat mechanism of a computer cluster is utilized for collecting state information from the computer nodes. The data may be collected for the purposes of the cluster only, or for an entity external to the cluster, such as a network monitoring or management system 160 connected to the network. The heartbeat acknowledgment messages are used to carry state information from the cluster nodes to the manager node, which then stores the information in a Management Information Base (MIB) 150.

In one embodiment of the invention, the MIB is made available for both entities within the computer cluster and for entities external to the computer cluster. For example, the internal fault management of the cluster may utilize the data collected. The fault management logic may be distributed in the cluster with an agent 130 residing in the manager node so that the fault management system can read data from the MIB. In other words, the fault management system may comprise a client-server mechanism with the server part residing in the manager node and the client parts residing in the computer nodes. Another cluster entity capable of utilizing the MIB is a computer node that allocates incoming tasks to the computer nodes performing said tasks. In addition to the above-mentioned IPD node, any other cluster node may operate as such a load balancing entity.

Access to the MIB can be implemented in any known manner either directly or through the manager node, depending on whether the MIB forms an independent network node or whether it is connected to the manager node. The MIB may also be connected to a computer node other than the manager node.

FIG. 2 is a flow diagram illustrating an example of the basic operation of the manager node with respect to one heartbeat message sent to another computer node. It is thus to be noted here that FIG. 2 illustrates the operation with respect to one heartbeat message sent, i.e., the periodic sending of the heartbeat messages is not shown in the figure. When the manager node transmits a heartbeat message, it sets a timer (step 201) and starts to monitor if a heartbeat acknowledgment message is received as a response from said another computer node (step 202). If this acknowledgment message arrives before the expiration of the timer, the manager node examines the message (step 204). If the manager node detects the message contains state information, it extracts the said information from the message and updates the MIB based on the information (step 207). In case of an acknowledgment message void of state information the manager node proceeds in a conventional manner.

If the timer expires before a heartbeat acknowledgment message is received, the manager node concludes that a communication failure has occurred with the computer node, and starts recovery measures (step 205). In practice, the time period measured by the timer is so long that more than one heartbeat messages can be transmitted within that period. A heartbeat acknowledgment received for any of these messages then triggers the process to jump to step 204. Normally the manager node proclaims a computer node to be faulty when N successive heartbeat messages remain without an acknowledgment from that computer node. The manager node may thus be allowed to lose a given number of heartbeat messages before the recovery measures are started. Particularly in case of the UDP (User Datagram Protocol), which is commonly used for carrying hearbeat messages, messages may be lost without a real problem existing in the network. In view of the above, FIG. 2 is to be seen merely as an illustration of the processing principles of the incoming heartbeat acknowledgment messages in the manager node, while the actual implementation of the relevant manager node algorithm may vary in many ways.

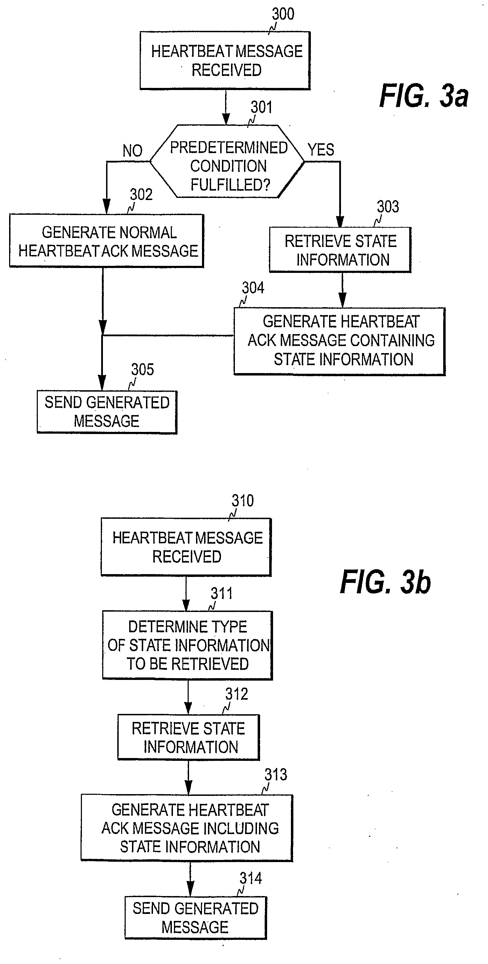

FIG. 3a is a flow diagram illustrating an example of the operation of a computer node with respect to one heartbeat message received from the manager node. When the heartbeat message is received, the computer node examines (step 301) whether a predetermined condition is fulfilled. This predetermined condition is set in order not to transfer state information unnecessarily in the acknowledgment messages. If the condition is fulfilled, the computer node retrieves state information from its memory (step 303) and generates a heartbeat acknowledgment message containing the state information retrieved. If the predetermined condition is not fulfilled, the computer node generates a normal heartbeat acknowledgment message, i.e. a heartbeat acknowledgment message without state information (302). The generated message is then sent back to the manager node (step 305).

The predetermined condition set for the retrieval of the state information is typically such that a certain minimum time period must have passed since the latest transmission of state information to the manager node. If this time limit has been exceeded, new state information is retrieved and inserted into the heartbeat acknowledgment message. Otherwise a normal heartbeat acknowledgment message is sent. In order to detect when the time limit has been exceeded, the computer node may start a counter at step 305. The current value of the counter is then examined at step 301 in connection with a subsequent heartbeat message. The computer node thus typically sends both normal heartbeat acknowledgment messages and heartbeat acknowledgment messages containing the state information, the proportions of these two message types depending on the rate of the heartbeat messages received.

The predetermined condition set for the retrieval of the state information may also consist of several sub-conditions that must be fulfilled before state information is retrieved. If the load of the computer node is used as such a sub-condition, the retrieval of the state information could occur, for example, only if both a certain minimum time period has passed since the latest transmission of state information and the current load of the computer node is below a certain maximum level.

As shown in FIG. 3b, it is also possible that the node determines, in response to the reception of a heartbeat message, the type of state information to be retrieved (step 311). Different types of information may thus be carried by successive heartbeat acknowledgment messages. For example, if heartbeat messages are transmitted frequently enough, a certain set of parameters may be carried by N successive heartbeat acknowledgment messages, the same set being again transmitted by the next N heartbeat acknowledgment messages, and so on. Furthermore, certain information (parameters) may be transferred less frequently than other information.

The state information retrieved from the memory depends generally on the application running on the computer node. However, certain basic parameters that relate to the operating system of the computer node are the same for all computer nodes. These parameters include figures indicating the CPU idle time and the number of certain I/O operations, for example. Basically, the state information can be divided into two groups: the parameters relating to the performance of the applications and the parameters relating to the performance and/or state of the node platform.

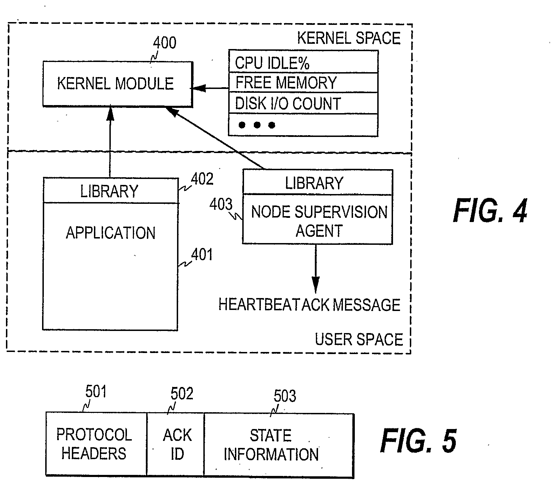

FIG. 4 illustrates an example of the software architecture of the heartbeat acknowledgment generation in a computer node. A kernel module 400 residing in the kernel space receives the parameters relating to the operating system directly from the kernel space of the computer node. In the user-space, where the applications are executed, each application 401 may have a library 402 through which it can write the relevant parameters to the kernel module. A supervision agent 403 residing in the user space retrieves the state information from the kernel module if the predetermined condition is fulfilled, and constructs the heartbeat acknowledgment message containing the information retrieved. In the embodiment of FIG. 4, the storage of the state information is thus implemented in the operating system, which provides a faster operation. However, the state information may also be stored in a mass memory, such as a disk.

FIG. 5 illustrates a general structure of the heartbeat acknowledgment message containing state information. The message comprises three successive portions: a header portion 501 that includes the protocol headers of the relevant protocols (such as Ethernet, IP and TCP/UDP headers), an acknowledgment identifier 502, and a payload portion 503 that contains the state information retrieved in the computer node. The message is thus otherwise similar to a conventional heartbeat acknowledgment message, but it includes a payload portion that contains the state information. In one embodiment of the invention the payload portion is encoded by using ASN.1 (Abstract Syntax Notation One) and PER (Packed Encoding Rules) coding. In this way the state information can be packed efficiently and more information can be inserted into the same message space. Depending on the protocols used, part of the state information may be transmitted without causing any extra load in the network. This is the case if the length of a conventional heartbeat message is shorter than the length of the minimum transmission unit, in which case state information may be used as the padding bits.

The load increase caused by a heartbeat acknowledgment message of the invention is relatively small as compared to the load caused by a conventional heartbeat acknowledgment message. This is because the overhead caused by a longer message is relatively low, since in short messages the protocol header takes a major part of the transmitted message. Furthermore, as messages shorter than a minimum message length are normally filled up, they may now be filled with the state information. In this way part of the state information may be transferred without causing extra load in the network. The extra load caused by the method of the invention therefore also depends on the environment where the invention is applied. In an Ethernet network, for example, this minimum message lenght is 64 bytes, which is more than portions 501 and 502 require.

Although the invention was described above with reference to the examples shown in the appended drawings, it is obvious that the invention is not limited to these, but may be modified by those skilled in the art without departing from the scope of the invention. For example, it is not necessary to check whether a normal heartbeat acknowledgment message or a heartbeat acknowledgment message containing state information is to be sent, but an acknowledgment message containing state information can be sent in response to every heartbeat message.

## Claims

1. A method for transferring state information in a computer cluster (100) comprising a plurality of computer nodes (110₁-110_{N}), the method comprising the steps of:
- receiving (300), in a second computer node (110₂-110_{N}) of a computer cluster, periodic heartbeat messages (HB) from a first computer node (110₁) of the computer cluster, the second computer node including at least one resource for performing at least one cluster-specific task;
- transmitting (302) heartbeat acknowledgement messages (HB_ACK; 501, 502) from the second computer node to the first computer node as responses to the heartbeat messages, wherein each heartbeat acknowledgement message indicates to the first computer node (110₁) that the second computer node (110₂-110_{N}) is operative within the computer cluster (100) and wherein the heartbeat acknowledgement messages form a sequence of heartbeat acknowledgement messages transmitted from the second computer node to the first computer node;
**characterized in that** the method further comprises the steps of
examining (301), in the second computer node, on the basis of a time period that has passed since the latest transmission of state information to the first computer node, whether state information (503) is to be retrieved for a heartbeat acknowledgment message (HB_ACK; 501, 502) to be transmitted to the first computer node, the state information being indicative of the current ability of said at least one resource to perform said at least one cluster-specific task;
- retrieving (303) the state information for the heartbeat acknowledgment message when the examining indicates that the state information is to be retrieved; and
- sending (305) the retrieved state information in the heartbeat acknowledgment message to the first computer node,
wherein the examining is performed for each heartbeat acknowledgement message to be transmitted to the first computer node, thereby to carry a sequence of the state information within the sequence of heartbeat acknowledgement messages.

2. A method according to claim 1, wherein the examining step includes examining whether a predetermined condition is fulfilled, wherein the predetermined condition is fulfilled if a minimum time period has passed since the latest transmission of state information to the first computer node.

3. A method according to claim 2, wherein the retrieving and sending steps are performed when the examining step indicates that the predetermined condition is fulfilled, and wherein the heartbeat acknowledgment message is sent without state information when the examining step indicates that the predetermined condition fails to be fulfilled.

4. A method according to claim 1, further comprising a step of determining (311) a type of state information to be retrieved for the heartbeat acknowledgment message.

5. A computer cluster (100) comprising a plurality of computer nodes (110₁-110_{N}), the computer cluster comprising:
- first means for receiving, in a second computer node (110₂-110_{N}) of the computer cluster, a heartbeat message (HB) transmitted from a first computer node (110₁) of the computer cluster, the second computer node including at least one resource for performing at least one cluster-specific task;
- second means for transmitting heartbeat acknowledgement messages (HB_ACK; 501, 502) from the second computer node to the first computer node as responses to the heartbeat messages, wherein each heartbeat acknowledgement message indicates to the first computer node that the second computer node is operative within the computer network and wherein the heartbeat acknowledgement messages form a sequence of heartbeat acknowledgement messages,
**characterized in that** the second means comprise
- third means (403) for examining, upon reception of a heartbeat message on the basis of a time period that has passed since the latest transmission of state information to the first computer node, whether state information (503) is to be retrieved for a heartbeat acknowledgment message to be transmitted to the first computer node, the state information being indicative of current ability of said at least one resource to perform said at least one cluster-specific task;
- fourth means, responsive to the third means, for retrieving the state information for the heartbeat acknowledgment message; and
- fifth means for sending the retrieved state information (503) in the heartbeat acknowledgment message to the first computer node,
wherein the third means are configured to operate for each heartbeat acknowledgement message to be transmitted to the first computer node, thereby to carry a sequence of the state information within the sequence of heartbeat acknowledgement messages.

6. A computer cluster according to claim 5, further comprising a Management Information Base (150) operably connected to the first computer node (110₁) for storing the state information sent to the first computer node.

7. A computer cluster according to claim 6, further comprising first access means for accessing the Management Information Base (150) from the computer cluster (100).

8. A computer cluster according to claim 6, further comprising second access means for accessing the Management Information Base (150) from outside of the computer cluster (100).

9. A computer cluster according to claim 8, wherein the second access means comprise a network interface in the first computer node.

10. A computer node for a computer cluster (100), the computer node (110₂-110_{N}) comprising:
- at least one resource for performing at least one cluster-specific task;
- first means for receiving periodic heartbeat messages (HB) from another computer node (110₁);
- second means for transmitting heartbeat acknowledgement messages (HB_ACK; 501, 502) to the other computer node as responses to the heartbeat messages (HB), wherein each heartbeat acknowledgement message indicates to the other computer node that the computer node is operative within the computer cluster and wherein the heartbeat acknowledgement messages form a sequence of heartbeat acknowledgement messages,
**characterized in that** the second means comprise
- third means (403) for examining, upon reception of a heartbeat message on the basis of a time period that has passed since the latest transmission of state information to the first computer node, whether state information (503) is to be retrieved for a heartbeat acknowledgment message to be transmitted to the first computer node, the state information being indicative of current ability of said at least one resource to perform said at least one cluster-specific task;
- fourth means (403), responsive to the third means, for retrieving the state information for the heartbeat acknowledgment message,; and
- fifth means, responsive to the fourth means, for sending the retrieved state information (503) in the heartbeat acknowledgment message to said another computer node,
wherein the third means are configured to operate for each heartbeat acknowledgement message to be transmitted to the first computer node, thereby to carry a sequence of the state information within the sequence of heartbeat acknowledgement messages.

## Patentansprüche

1. Verfahren zum Übertragen von Zustandsinformationen in einem Computercluster (100), der mehrere Computerknoten (110₁- 110_{N}) umfasst, wobei das Verfahren die Schritte umfasst:
- Empfangen (300), in einem zweiten Computerknoten (110₂-110_{N}) eines Computerclusters, von periodischen Heartbeat-Nachrichten (HB) aus einem ersten Computerknoten (110₁) des Computerclusters, wobei der zweite Computerknoten wenigstens eine Ressource zum Durchführen wenigstens einer clusterspezifischen Aufgabe einschließt;
- Übertragen (302) von Heartbeat-Bestätigungsnachrichten (HB_ACK; 501, 502) aus dem zweiten Computerknoten an den ersten Computerknoten als Antworten auf die Heartbeat-Nachrichten, wobei die Heartbeat-Bestätigungsnachrichten dem ersten Computerknoten (110₁) jeweils anzeigen, das der zweite Computerknoten (110₂- 110_{N}) betriebsbereit ist im Computercluster (100), und wobei die Heartbeat-Bestätigungsnachrichten eine Folge von aus dem zweiten Computerknoten an den ersten Computerknoten übertragenen Heartbeat-Bestätigungsnachrichten bilden;
**dadurch gekennzeichnet, dass** das Verfahren ferner die Schritte umfasst:
- Untersuchen (301), im zweiten Computerknoten, auf der Basis des seit der letzten Übertragung von Zustandsinformationen an den ersten Computerknoten verstrichenen Zeitraums, ob Zustandsinformationen (503) für eine an den ersten Computerknoten zu übertragende Heartbeat-Bestätigungsnachricht (HB_ACK; 501, 502) abgerufen werden sollen, wobei die Zustandsinformationen die aktuelle Fähigkeit der wenigstens einen Ressource anzeigen, die wenigstens eine clusterspezifische Aufgabe durchzuführen;
- Abrufen (303) der Zustandsinformationen für die Heartbeat-Bestätigungsnachricht, wenn die Untersuchung anzeigt, dass die Zustandsinformationen abgerufen werden sollen; und
- Senden (305) der abgerufenen Zustandsinformationen in der Heartbeat-Bestätigungsnachricht an den ersten Computerknoten, wobei die Untersuchung für jede an den ersten Computerknoten zu übertragenden Heartbeat-Bestätigungsnachricht durchgeführt wird, damit dadurch eine Folge der Zustandsinformationen innerhalb der Folge von Heartbeat-Bestätigungsnachrichten mitgeführt wird.

2. Verfahren gemäß Anspruch 1, wobei der Untersuchungsschritt einschließt, zu untersuchen, ob eine vorbestimmte Bedingung erfüllt ist, wobei die vorbestimmte Bedingung erfüllt ist, falls ein Mindestzeitraum seit der letzten Übertragung von Zustandsinformationen an den ersten Computerknoten verstrichen ist.

3. Verfahren gemäß Anspruch 2, wobei die Schritte des Abrufens und Sendens durchgeführt werden, wenn der Untersuchungsschritt anzeigt, dass die vorbestimmte Bedingung erfüllt ist, und wobei die Heartbeat-Bestätigungsnachricht ohne Zustandsinformationen gesendet wird, wenn der Untersuchungsschritt anzeigt, dass die vorbestimmte Bedingung nicht erfüllt ist.

4. Verfahren gemäß Anspruch 1, ferner umfassend einen Schritt des Bestimmens (311) eines Typs von Zustandsinformationen, die für die Heartbeat-Bestätigungsnachricht abgerufen werden sollen.

5. Computercluster (100) umfassend eine Mehrzahl von Computerknoten (110₁-110_{N}), wobei der Computercluster umfasst:
- ein erstes Mittel zum Empfangen, in einem zweiten Computerknoten (110₂-110_{N}) des Computerclusters, einer aus einem ersten Computerknoten (110₁) des Computerclusters übertragenen Heartbeat-Nachricht (HB), wobei der zweite Computerknoten wenigstens eine Ressource zum Durchführen wenigstens einer clusterspezifischen Aufgabe einschließt;
- ein zweites Mittel zum Übertragen von Heartbeat-Bestätigungsnachrichten (HB_ACK; 501, 502) aus dem zweiten Computerknoten an den ersten Computerknoten als Antworten auf die Heartbeat-Nachrichten, wobei die Heartbeat-Bestätigungsnachrichten dem ersten Computerknoten jeweils anzeigen, das der zweite Computerknoten betriebsbereit ist im Computercluster, und wobei die Heartbeat-Bestätigungsnachrichten eine Folge von Heartbeat-Bestätigungsnachrichten bilden,
**dadurch gekennzeichnet, dass** das zweite Mittel umfasst:
- ein drittes Mittel (403) zum Untersuchen, nach Empfangen der Heartbeat-Nachricht, auf der Basis des seit der letzten Übertragung von Zustandsinformationen an den ersten Computerknoten verstrichenen Zeitraums, ob Zustandsinformationen (503) für eine an den ersten Computerknoten zu übertragende Heartbeat-Bestätigungsnachricht abgerufen werden sollen, wobei die Zustandsinformationen die aktuelle Fähigkeit der wenigstens einen Ressource anzeigen, die wenigstens eine clusterspezifische Aufgabe durchzuführen;
- ein viertes Mittel, das auf das dritte Mittel reagiert, zum Abrufen der Zustandsinformationen für die Heartbeat-Bestätigungsnachricht; und
- ein fünftes Mittel zum Senden der abgerufenen Zustandsinformationen (503) in der Heartbeat-Bestätigungsnachricht an den ersten Computerknoten, wobei das dritte Mittel ausgelegt ist, für jede an den ersten Computerknoten zu übertragende Heartbeat-Bestätigungsnachricht tätig zu werden, damit dadurch eine Folge der Zustandsinformationen innerhalb der Folge von Heartbeat-Bestätigungsnachrichten mitgeführt wird.

6. Computercluster gemäß Anspruch 5, ferner umfassend eine in Funktionsverbindung mit dem ersten Computerknoten (110₁) verbundene Management-Informationsbasis (150) zum Speichern der an den ersten Computerknoten gesendeten Zustandsinformationen.

7. Computercluster gemäß Anspruch 6, ferner umfassend ein erstes Zugriffsmittel zum Zugreifen auf die Management-Informationsbasis (150) aus dem Computercluster (100).

8. Computercluster gemäß Anspruch 6, ferner umfassend ein zweites Zugriffsmittel zum Zugreifen auf die Management-Informationsbasis (150) von außerhalb des Computerclusters (100).

9. Computercluster gemäß Anspruch 8, wobei das zweite Zugriffsmittel eine Netzwerkschnittstelle im ersten Computerknoten umfasst.

10. Computerknoten für einen Computercluster (100), wobei der Computerknoten (110₂-110_{N}) umfasst:
- wenigstens eine Ressource zum Durchführen wenigstens einer clusterspezifischen Aufgabe;
- ein erstes Mittel zum Empfangen periodischer Heartbeat-Nachrichten (HB) aus einem anderen Computerknoten (110₁);
- ein zweites Mittel zum Übertragen von Heartbeat-Bestätigungsnachrichten (HB_ACK; 501, 502) an den anderen Computerknoten als Antworten auf die Heartbeat-Nachrichten (HB), wobei die Heartbeat-Bestätigungsnachrichten dem anderen Computerknoten jeweils anzeigen, dass der Computerknoten betriebsbereit ist im Computercluster, und wobei die Heartbeat-Bestätigungsnachrichten eine Folge von Heartbeat-Bestätigungsnachrichten bilden,
**dadurch gekennzeichnet, dass** das zweite Mittel umfasst:
- ein drittes Mittel (403) zum Untersuchen, nach Empfangen der Heartbeat-Nachricht, auf der Basis des seit der letzten Übertragung von Zustandsinformationen an den ersten Computerknoten verstrichenen Zeitraums, ob Zustandsinformationen (503) für eine an den ersten Computerknoten zu übertragende Heartbeat-Bestätigungsnachricht abgerufen werden sollen, wobei die Zustandsinformationen die aktuelle Fähigkeit der wenigstens einen Ressource anzeigen, die wenigstens eine clusterspezifische Aufgabe durchzuführen;
- ein viertes Mittel (403), das auf das dritte Mittel reagiert, zum Abrufen der Zustandsinformationen für die Heartbeat-Bestätigungsnachricht; und
- ein fünftes Mittel, das auf das vierte Mittel reagiert, zum Senden der abgerufenen Zustandsinformationen (503) in der Heartbeat-Bestätigungsnachricht an den anderen Computerknoten, wobei das dritte Mittel ausgelegt ist, für jede an den ersten Computerknoten zu übertragende Heartbeat-Bestätigungsnachricht tätig zu werden, damit dadurch eine Folge der Zustandsinformationen innerhalb der Folge von Heartbeat-Bestätigungsnachrichten mitgeführt wird.

## Revendications

1. Procédé pour transférer des informations d'état dans un groupe d'ordinateurs (100) comprenant une pluralité de noeuds informatiques (110, à 110N), le procédé comprenant les étapes consistant :
- à recevoir (300), dans un second noeud informatique (110₂ à 110_{N}) d'un groupe d'ordinateurs, des messages de battement de coeur périodiques (HB) en provenance d'un premier noeud informatique (110₁) du groupe d'ordinateurs, le second noeud informatique comprenant au moins une ressource pour effectuer au moins une tâche spécifique au groupe ;
- à transmettre (302) des messages d'accusé de réception de battement de coeur (HB_ACK ; 501, 502) depuis le second noeud informatique au premier noeud informatique en tant que réponses aux messages de battement de coeur, dans lequel chaque message d'accusé de réception de battement de coeur indique au premier noeud informatique (110₁) que le second noeud informatique (110₂ à 110_{N}) est opérationnel dans le groupe d'ordinateurs (100) et dans lequel les messages d'accusé de réception de battement de coeur forment une séquence de messages d'accusé de réception de battement de coeur transmis depuis le second noeud informatique au premier noeud informatique ;
**caractérisé en ce que** le procédé comprend en outre les étapes consistant
à examiner (301), dans le second noeud informatique, sur la base d'une période de temps qui a passé depuis la dernière transmission d'informations d'état au premier noeud informatique, si des informations d'état (503) doivent être récupérées pour un message d'accusé de réception de battement de coeur (HB_ACK; 501, 502) qui doit être transmis au premier noeud informatique, les informations d'état indiquant la capacité actuelle de ladite ou desdites ressources à effectuer ladite ou lesdites tâches spécifiques au groupe ;
- à récupérer (303) les informations d'état pour le message d'accusé de réception de battement de coeur lorsque l'examen indique que les informations d'état doivent être récupérées ; et
- à envoyer (305) les informations d'état récupérées dans le message d'accusé de réception de battement de coeur au premier noeud informatique,
dans lequel l'examen est effectué pour chaque message d'accusé de réception de battement de coeur qui doit être transmis au premier noeud informatique, ce qui permet d'avoir une séquence des informations d'état dans la séquence de messages d'accusé de réception de battement de coeur.

2. Procédé selon la revendication 1, dans lequel l'étape d'examen consiste à examiner si une condition prédéterminée est remplie, dans lequel la condition prédéterminée est remplie si une période de temps minimale a passé depuis la dernière transmission d'informations d'état au premier noeud informatique.

3. Procédé selon la revendication 2, dans lequel les étapes de récupération et d'envoi sont réalisées lorsque l'étape d'examen indique que la condition prédéterminée est remplie et dans lequel le message d'accusé de réception de battement de coeur est envoyé sans informations d'état lorsque l'étape d'examen indique que la condition prédéterminée ne peut pas être remplie.

4. Procédé selon la revendication 1, comprenant en outre une étape consistant à déterminer (311) un type d'informations d'état qui doivent être récupérées pour le message d'accusé de réception de battement de coeur.

5. Groupe d'ordinateurs (100) comprenant une pluralité de noeuds informatiques (110₁ à 110N), le groupe d'ordinateurs comprenant :
- des premiers moyens pour recevoir, dans un second noeud informatique (110₂ à 110_{N}) du groupe d'ordinateurs, un message de battement de coeur (HB) transmis depuis un premier noeud informatique (110₁) du groupe d'ordinateurs, le second noeud informatique comprenant au moins une ressource pour effectuer au moins une tâche spécifique au groupe ;
- des deuxièmes moyens pour transmettre des messages d'accusé de réception de battement de coeur (HB_ACK ; 501, 502) depuis le second noeud informatique au premier noeud informatique en tant que réponses aux messages de battement de coeur, dans lequel chaque message d'accusé de réception de battement de coeur indique au premier noeud informatique que le second noeud informatique est opérationnel dans le réseau d'ordinateurs et dans lequel les messages d'accusé de réception de battement de coeur forment une séquence de messages d'accusé de réception de battement de coeur ;
**caractérisé en ce que** les deuxièmes moyens comprennent
- des troisièmes moyens (403) pour examiner, lors de la réception d'un message de battement de coeur, sur la base d'une période de temps qui a passé depuis la dernière transmission d'informations d'état au premier noeud informatique, si des informations d'état (503) doivent être récupérées pour un message d'accusé de réception de battement de coeur qui doit être transmis au premier noeud informatique, les informations d'état indiquant la capacité actuelle de ladite ou desdites ressources à effectuer ladite ou lesdites tâches spécifiques au groupe ;
- des quatrièmes moyens, sensibles aux troisièmes moyens, pour récupérer les informations d'état pour le message d'accusé de réception de battement de coeur ; et
- des cinquièmes moyens pour envoyer les informations d'état récupérées (503) dans le message d'accusé de réception de battement de coeur au premier noeud informatique,
dans lequel les troisièmes moyens sont configurés pour fonctionner pour chaque message d'accusé de réception de battement de coeur qui doit être transmis au premier noeud informatique, ce qui permet d'avoir une séquence des informations d'état dans la séquence de messages d'accusé de réception de battement de coeur.

6. Groupe d'ordinateurs selon la revendication 5, comprenant en outre une base d'informations de gestion (150) raccordée de manière fonctionnelle au premier noeud informatique (110₁) pour stocker les informations d'état envoyées au premier noeud informatique.

7. Groupe d'ordinateurs selon la revendication 6, comprenant en outre des premiers moyens d'accès pour avoir accès à la base d'informations de gestion (150) à partir du groupe d'ordinateurs (100).

8. Groupe d'ordinateurs selon la revendication 6, comprenant en outre des seconds moyens d'accès pour avoir accès à la base d'informations de gestion (150) depuis l'extérieur du groupe d'ordinateurs (100).

9. Groupe d'ordinateurs selon la revendication 8, dans lequel les seconds moyens d'accès comprennent une interface réseau dans le premier noeud informatique.

10. Noeud informatique pour un groupe d'ordinateurs (100), le noeud informatique (110₂ à 110_{N}) comprenant :
- au moins une ressource pour effectuer au moins une tâche spécifique au groupe ;
- des premiers moyens pour recevoir des messages de battement de coeur périodiques (HB) en provenance d'un autre noeud informatique (110₁) ;
- des deuxièmes moyens pour transmettre des messages d'accusé de réception de battement de coeur (HB_ACK ; 501, 502) à l'autre noeud informatique en tant que réponses aux messages de battement de coeur (HB), dans lequel chaque message d'accusé de réception de battement de coeur indique à l'autre noeud informatique que le noeud informatique est opérationnel dans le réseau d'ordinateurs et dans lequel les messages d'accusé de réception de battement de coeur forment une séquence de messages d'accusé de réception de battement de coeur ;
**caractérisé en ce que** les deuxièmes moyens comprennent
- des troisièmes moyens (403) pour examiner, lors de la réception d'un message de battement de coeur, sur la base d'une période de temps qui a passé depuis la dernière transmission d'informations d'état au premier noeud informatique, si des informations d'état (503) doivent être récupérées pour un message d'accusé de réception de battement de coeur qui doit être transmis au premier noeud informatique, les informations d'état indiquant la capacité actuelle de ladite ou desdites ressources à effectuer ladite ou lesdites tâches spécifiques au groupe ;
- des quatrièmes moyens (403), sensibles aux troisièmes moyens, pour récupérer les informations d'état pour le message d'accusé de réception de battement de coeur ; et
- des cinquièmes moyens, sensibles aux quatrièmes moyens, pour envoyer les informations d'état récupérées (503) dans le message d'accusé de réception de battement de coeur au dit autre noeud informatique,
dans lequel les troisièmes moyens sont configurés pour fonctionner pour chaque message d'accusé de réception de battement de coeur qui doit être transmis au premier noeud informatique, ce qui permet d'avoir une séquence des informations d'état dans la séquence de messages d'accusé de réception de battement de coeur.
